# EUROPEAN PATENT APPLICATION

(11) **EP 4 119 355 A1**
(43) Date of publication of application: **18.01.2023**
(21) Application number: 21768124.6
(22) Date of filing: 17.02.2021
(51) Int. Cl.: B42D 25/00, B42D 25/324, B32B 27/10, A44C 21/00, B31F 1/07

(54) **METHOD FOR MANUFACTURING A SECURE MULTI-LAYERED COMPOSITE POLYMER COIN- OR TOKEN-TYPE ARTICLE**

(30) Priority: 10.03.2020 RU 2020110014
(71) Applicant: Joint Stock Company "Goznak", Saint-Petersburg, 197046 (RU)
(72) Inventor: KURYATNIKOV, Andrey Borisovich, Moscow, 129128 (RU); KORNILOV, Georgy Valentinovich, Moscow, 117198 (RU); FEDOROVA, Elena Mikhaylovna, Moscow, 115093 (RU); AKININ, Aleksey Borisovich, Moscow, 109462 (RU); BOEV, Sergei Nikolaevich, Odintsovo, 143005 (RU); PRIZONT, Boris Aleksandrovich, Moscow, 127322 (RU)
(74) Representative: Zimmermann, Tankred Klaus
(86) International application number: PCT/RU2021/050040
(87) International publication number: WO 2021/183006

(57) **Abstract**

The invention relates to composite articles and layered polymeric materials, for example materials for paper- and plastic-based tokens, and can be used in the manufacture of security articles such as coins, tokens, medals, badges. A method for manufacturing a multilayer composite polymeric security article, such as a coin, a token, a commemorative badge, a medal, including preliminarily coining of an initial metal ring followed by pressing-in a security element in the form of a composite disc insert, is characterized in that, at the coining step, simultaneous all-round compressing of the composite disc insert is carried out without its destruction while simultaneously carrying out cold textured embossing to an embossing relief depth of not more than 0.05 mm on the surface of the disc insert pre-cut from a sheet composite layered material containing a thermosetting multilayer organic plastic and stacked paper sheets pre-impregnated with a polymeric binder so that the surface of each sheet is covered with a polymer layer, followed by hot pressing, and the coining is performed with simultaneous embossing on a coining press at a force developed from 400 to 950 kNm.

## Description

The invention relates to composite articles and layered polymeric materials, for example, materials for paper- and plastic-based tokens, and can be used in the manufacture of security articles such as coins, tokens, medals, badges.

Currently, designers in this field of art are striving to create or use processes and materials enabling the manufacture of multipart articles which, on the one hand, would be difficult to counterfeit and, on the other hand, could be easily verified for their authenticity.

A polystyrene composition containing activated amorphous carbon and titanium dioxide additives for a token for a coin-operated device is known (RU2111987, publ. 27.05.1998). The composition comprises, as polystyrene, a high-impact polystyrene of UPS-825E grade and allows the production of a polymer composition with adjustable optical characteristics in the IR region of spectrum.

Similar token articles made of various plastics (polyacrylate, polystyrene, polyvinyl acetate, etc.) for mass production of tokens for coin-operated devices are known in US3153469, publ. 18.09.1961).

A polymer-containing composite article based on polystyrene and metal is known in US3542180, publ. 24.11.1970. The metal is contained as an additive of finely dispersed metal filler.

A composite article being a coin simulator is known (SU1147344, publ. 30.05.1985) in the form of a two-layer plate having a hole and an elastic polymer/rubber gasket covering the hole. Elastic gaskets are made of at least one film layer.

A token for payment of fares in subways, payphones, vending and gaming machines, said token being based on a polymeric material and comprising coding elements such as a diffuser, luminescent substances, absorbers, and additional marks applied on its flat surfaces, is known from the prior art (RU 2121285, publ. 10.11.1998). The token can be made as a flat round disc, rectangle, triangle, or another shape by an injection molding technique. However, the known token is made of a single material, which makes it easier to counterfeit.

An identification document of a layered structure is known, said document comprising a permanently joined stack of document elements which consists of an upper translucent layer and a lower translucent layer of a polymeric material, a substrate of a translucent polymeric material and a layer forming a contour layer of the substrate, an information insert placed on the substrate under the upper translucent layer with a window formed therein and containing information about the document owner. Finely dispersed Teflon coating is spot-sprayed on the entire face of the information insert over the entire surface of the document, except for the area for a photograph. In addition to the document owner details, the information insert comprises a set of code inscriptions, symbols and signs that identify the category of the document, its scope and application, etc. The entire inner surface of the front cover of the translucent material, except for the area for a photograph with molecular surface layer, is coated with an adhesive coating which ensures permanent joining the identification document after heat treatment under pressure. The identification document has security luminescent marks on inner surfaces of the upper and lower translucent layers and a luminescent coating on the surface of the contour layer of its substrate. The information insert is placed on the substrate and the owner photograph window is positioned under the inner surface area of the upper translucent layer with molecular surface layer (RU 2128587, publ. 10.04.1999). However, disadvantages of the known solution include insufficient security level.

A cash coin is known, comprising an outer ring, two inserts stacked one on top of the other and located inside the outer ring, at least one intermediate layer located between the two inserts for adhesion of the two inserts to each other. The outer ring and each of the two inserts are made of different materials. The outer ring and the two inserts of the coin are made of multilayer coated materials, each insert has a surface having two opposite sides and an outer peripheral surface, the outer ring and each of the inserts are fastened together through a plurality of recesses formed on the outer peripheral surface of each of the inserts, each recess being made as a hole on the outer peripheral surface, wherein the holes are inclined relative to the insert stacking direction and the holes are inclined relative to a plane coplanar to said opposite sides (RU 2608290, publ. 17.01.2017). A disadvantage of the known coin consists in insufficient level of security and verification of its authenticity.

A closest prior art in terms of technical essence and achieved result is a technical solution described in the application WO 2012156006, publ. 22.11.2012, which teaches a token-shaped article consisting of multiple parts, including an outer metal ring and a disc-shaped plastic core, pressed together. The core of the article comprises security features, including a microchip. The prior art disclosure does not mention either the ability of using plastic materials based on paper layers in the article, or the ability of applying an embossed structure in the form of engraved identification images, tactile and similar elements onto the metal part of the article, which results in, on the one hand, a decrease in the level of security of the article and, on the other hand, makes it difficult to verify authenticity of the article.

A most closest composition in terms of its contents is a known composition described in RU 2706655 (publ. 19.11.2019).

An objective solved by the invention is to provide an identification article having an enhanced level of security, which is simple both in the manufacture and in verification of its authenticity.

The present method offers the following technical result and advantages:
- Use of cold textured embossing does not result in changing the material properties, which happens upon hot embossing;
- Cold textured embossing makes it possible to simultaneously perform coining and assembling an article consisting of a metal ring and a non-metal disc insert;
- Cold textured embossing makes it possible to automate the multipart article assembling process, which decreases the labor intensity and the cost reduction because of avoiding the use of a composite layered material with a textured surface produced by hot pressing and expensive to produce;
- Cold textured embossing enables forming a special relief on the surface of articles with visual properties (manifested in obliquely incident rays) and tactile properties.

This is achieved by a proposed method for manufacturing a multilayer composite polymeric security article, such as a coin, a token, a commemorative badge, a medal, said method including preliminarily coining an initial metal ring followed by pressing-in a security element in the form of a composite disc insert, characterized in that, at the coining step, simultaneous all-round compressing of the composite disc insert is carried out without its destruction while simultaneously carrying out cold textured embossing to an embossing relief depth of not more than 0.05 mm on the surface of this disc insert pre-cut from a sheet composite layered material containing a thermosetting multilayer organic plastic and stacked paper sheets pre-impregnated with a polymer binder so that the surface of each sheet is covered with a polymer layer, followed by hot pressing, and the coining is performed with simultaneous embossing on a coining press at a force developed from 400 to 950 kNm.

The inner part of the article may have a disk shape with the security element on its surface and is made of a composite layered material having a Young's compression modulus of not more than 10 GPa.

There is also provided a composite coin-token multipart article manufactured by the above-described method, such as a coin, a token, a commemorative badge, a medal, said article comprising a metal ring with a pressed-in security element in the form of a composite disk insert, with textured embossing to an embossing relief depth of not more than 0.05 mm on the surface of the disc insert cut from a sheet composite layered material containing a thermosetting multilayer organic plastic and stacked paper sheets pre-impregnated with a polymer binder so that the surface of each sheet is covered with a polymer layer.

A composite coin-token multipart article according to Example 1 is shown in Fig. 1 (Example 2 in Fig. 2, and Example 3 in Fig. 3) where:
1 is a metal ring;
2 is a disk made of a composite layered material;
3 is a security element which represent a structure consisting of an outer part and an inner part. The outer part has a ring shape and is made of a cold-deformable metal (e.g., copper, brass, aluminum, etc.). The metal part of the article may have a coined engraving. The inner part of the article has a disk shape with the security element on its surface and is made of a composite layered material having a Young's compression modulus of not more than 10 GPa, which allows the material to absorb compressive stresses without destruction.

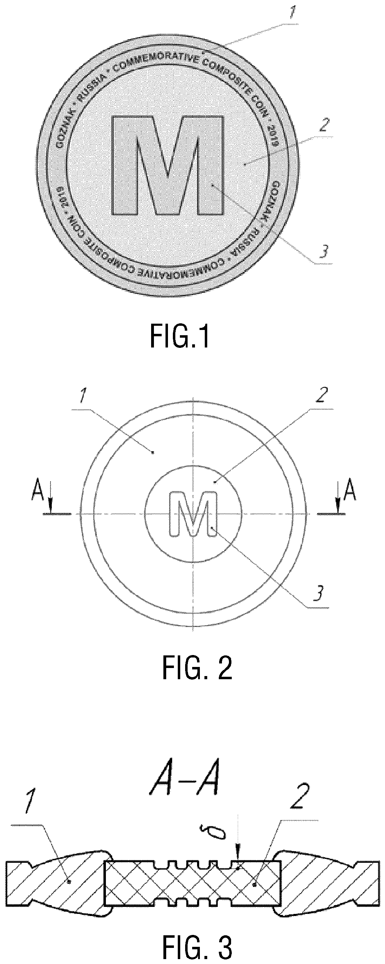

Figure 2 shows the security element of the article, representing a graphic pattern obtained by cold textured embossing on the surface of the inner part of the multipart article, a disk made of a composite layered material, by means of a coining tool on the surface of which the embossed pattern is located in the central portion.

Fig. 3 shows a graphic pattern on the surface of the multipart article, representing an image embossed in the surface of the disk to a depth of up to 0.05 mm. Examples 1, 2 and 3 correspond to the numbers of Figures 1, 2, 3, respectively.

### Example 1

According to the present invention, in order to obtain a cold textured embossing on an insert of a multipart article with a diameter of 33 mm of a finished multipart article, a disk cut from a flat composite layered material and a ring made of an aluminum alloy, the pressing force in the coining press will be 920±30 kNm, wherein a thickness of the disk of the composite layered material is from 1.6 to 1.8 mm, a thickness of the metal ring material is from 2.8 to 2.9 mm and a width of the annular part is from 3.1 to 4.1 mm. The geometric dimensions are determined empirically.

### Example 2

According to the present invention, in order to obtain a cold textured embossing on an insert of a multipart article with a diameter of 31 mm of a finished multipart article, a disk cut from a flat composite layered material and a ring made of an aluminum alloy, the pressing force in the coining press will be 820±30 kNm, wherein a thickness of the disk of the composite layered material is from 1.6 to 1.8 mm, a thickness of the metal ring material is from 2.8 to 2.9 mm and a width of the annular part is from 3.1 to 4.1 mm. The geometric dimensions are determined empirically.

### Example 3

According to the present invention, in order to obtain a cold textured embossing on an insert of a multipart article with a diameter of 27 mm of a finished multipart article, a disk cut from a flat composite layered material and a ring made of an aluminum alloy, the pressing force in the coining press will be 490±50 kNm, wherein a thickness of the disk of the composite layered material is from 1.6 to 1.8 mm, a thickness of the metal ring material is from 2.8 to 2.9 mm and a width of the annular part is from 3.1 to 4.1 mm. The geometric dimensions are determined empirically.

## Claims

1. A method for manufacturing a multilayer composite polymeric security article, such as a coin, a token, a commemorative badge, a medal, said method including preliminarily coining an initial metal ring followed by pressing-in a security element in the form of a composite disc insert, **characterized in that,** at the coining step, simultaneous all-round compressing of the composite disc insert is carried out without its destruction while simultaneously carrying out cold textured embossing to an embossing relief depth of not more than 0.05 mm on the surface of the disc insert pre-cut from a sheet composite layered material containing a thermosetting multilayer organic plastic and stacked paper sheets pre-impregnated with a polymer binder so that the surface of each sheet is covered with a polymer layer, followed by hot pressing, and the coining is performed with simultaneous embossing on a coining press at a force developed from 400 to 950 kNm.

2. The method according to claim 1, **characterized in that** the inner part of the article has a disk shape with the security element on its surface and is made of a composite layered material having a Young's compression modulus of not more than 10 GPa.

3. A composite coin-token multipart article manufactured by a method according to any one of claims 1, 2, such as a coin, a token, a commemorative badge, a medal, said article comprising a metal ring with a pressed-in security element in the form of a composite disk insert, with textured embossing to an embossing relief depth of not more than 0.05 mm on the surface of the disc insert cut from a sheet composite layered material containing a thermosetting multilayer organic plastic and stacked paper sheets pre-impregnated with a polymer binder so that the surface of each sheet is covered with a polymer layer.
